# DEMANDE DE BREVET EUROPEEN

(11) **EP 1 466 783 A1**
(43) Date de publication de la demande: **13.10.2004**
(21) Numéro de dépôt: 04290968.9
(22) Date de dépôt: 09.04.2004
(51) Int. Cl.: B60Q 1/10, B60Q 1/12

(54) **Dispositif d'éclairage pour véhicule automobile avec des éléments mobiles**

(30) Priorité: 11.04.2003 FR 0304585
(71) Demandeur: VALEO VISION, 93012 Bobigny Cédex (FR)
(72) Inventeur: L'Hermine, Alban, 75005 Paris (FR); Chave, Rémy, 75007 Paris (FR)
(74) Mandataire: Renous Chan, Véronique

(57) **Abrégé**

La présente invention se rapporte à un dispositif d'éclairage pour véhicule automobile, comportant au moins un dispositif projecteur (100) dans un boîtier de support, ledit dispositif projecteur (100) comportant au moins une source lumineuse associée à un réflecteur (101) pour générer un faisceau lumineux destiné à éclairer la route, ledit dispositif d'éclairage comportant au moins un élément mobile, choisi parmi le ou un des dispositif(s) projecteur(s) monté mobile par rapport au boîtier de support ou un composant mobile du ou d'un des dispositif(s) projecteur(s) par rapport au reste dudit dispositif projecteur ou par rapport audit boîtier de support, et un système de détermination de la position de l'élément mobile (100), ledit système comprenant un émetteur, pour produire une information de position dudit élément mobile, et un récepteur, pour récupérer l'information de position. L'émetteur est la source lumineuse et le récepteur est un élément photosensible (107), notamment comprenant au moins une cellule photosensible (108).

## Description

La présente invention a pour objet la détermination de la position d'éléments mobiles dans les dispositifs d'éclairage pour véhicule automobile. Il peut s'agir d'un dispositif projecteur mobile, essentiellement destiné à être utilisé dans les véhicules automobiles, équipé d'un système de recopie de position particulier. Il peut aussi s'agir d'éléments mobiles de taille plus réduite, notamment des caches basculants/pivotants qui peuvent intercepter une partie de la lumière émise par le projecteur, par exemple pour le faire passer d'un faisceau de type route à un faisceau de type code : on parle alors d'un cache bi-fonction, présentant une position »active », où il intercepte une partie de la lumière, et une position « neutre » où il est escamoté. L'invention a pour but d'apporter une amélioration dans les dispositifs de contrôle de position des projecteurs/pièces mobiles existant dans les dispositifs d'éclairage, en proposant un système fiable, faisant intervenir un nombre limité de pièces, tout en permettant de s'affranchir des phases d'initialisation des moteurs contrôlant les mouvements des dispositifs projecteurs mobiles. On comprend par dispositif projecteur un ensemble optique, une sous-unité d'un dispositif d'éclairage, et qui comprend usuellement une source lumineuse au moins associée à un réflecteur.

Le domaine de l'invention est, d'une façon générale, celui des projecteurs de véhicule automobile. Dans ce domaine, on connaît différents types de projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des projecteurs perfectionnés, dits bifonction, qui cumulent les fonctions de feux de croisement et de feu de route en incorporant un cache amovible ;
- des feux anti-brouillard.

De nouvelles fonctionnalités sont apparues également sous le terme anglo-saxon générique de AFS ou « Adaptative Frontlighting System » , notamment :
- une fonction dite BL (Bending Light en anglais pour lumière virage), qui peut se décomposer en une fonction dite DBL (Dynamic Bending Light en anglais pour lumière virage mobile) et une fonction dite FBL (Fixed Bending Light en anglais pour lumière virage fixe).
   La fonction DBL permet de modifier l'orientation d'un faisceau lumineux produit par une source lumineuse, de telle sorte que lorsque le véhicule aborde un virage, la route soit éclairée de façon optimale.
   La fonction FBL a pour vocation d'éclairer progressivement le bas-côté de la route lorsque le véhicule effectue un virage ; à cet effet, on prévoit une source lumineuse supplémentaire qui vient compléter progressivement les feux de croisement ou de route lors de la négociation d'un virage ;
- une fonction dite Town Light en anglais, pour feu de ville. Cette fonction assure l'élargissement d'un faisceau de type feu de croisement tout en diminuant légèrement sa portée ;
- une fonction dite Motorway Light en anglais, pour feu d'autoroute. Cette fonction assure une augmentation de la portée d'un feu de croisement ;
- une fonction dite Overhead Light en anglais, pour feu surélevé. Cette fonction assure une modification d'un faisceau de feu de croisement de telle sorte que des portiques situés en hauteur sont éclairés de façon satisfaisante au moyen des feux de croisement ;
- une fonction dite AWL (Adverse Weather Light en anglais, pour feu de mauvais temps). Cette fonction assure une modification d'un faisceau de feu de croisement de telle sorte que le conducteur n'est pas ébloui par un reflet de son propre projecteur.

Des caches mobiles bi-ou mutli-fonction sont un moyen pour permettre d'obtenir une ou plusieurs de ces fonctions AFS avec une seule source lumineuse.

Certains projecteurs sont disposés dans des boîtiers qui comportent une platine intermédiaire susceptible de pivoter, entraînant ainsi un déplacement du faisceau lumineux associé à ces projecteurs. Le plus souvent, la platine comporte trois points de fixation, qui sont autant de points de contact pour faire pivoter cette platine. Ils permettent ainsi aussi bien un réglage latéral pour ramener un faisceau lumineux dans son axe de visée théorique, qu'un réglage horizontal pour régler la hauteur d'un faisceau lumineux ; un des points de contact est le plus souvent utilisé comme point de pivotement pour permettre les mouvements latéraux ou horizontaux. Ce sont des tiges de moteurs, ou actionneurs, disposés à proximité des points de contact, ou des tiges associées à des systèmes purement mécaniques, qui servent le plus souvent d'intermédiaire mécanique pour contrôler le basculement des platines. Dans d'autres exemples de réalisation de dispositifs projecteurs orientables, on peut faire pivoter directement, selon un axe de rotation vertical et/ou horizontal, des dispositifs réflecteurs, sans platine intermédiaire, et toujours par l'intermédiaire de tiges de moteurs ou de systèmes mécaniques.

Les systèmes mécaniques auxquels il vient d'être fait référence étaient initialement prévus pour pouvoir effectuer des réglages manuels de l'orientation d'un faisceau lumineux. Ces réglages manuels étaient nécessairement effectués lorsque le véhicule automobile était à l'arrêt.

Cependant, notamment depuis l'utilisation de projecteurs au Xénon, plus puissants que les projecteurs halogènes, il est devenu obligatoire de disposer de systèmes automatiques de correction de portée d'éclairage ; l'utilisation d'actionneurs, associés à des calculateurs, est ainsi devenue indispensable pour compenser les changements d'assiette d'un véhicule tout au long de son parcours, en permettant un mouvement de basculement du dispositif projecteur selon un axe horizontal.

Par ailleurs, comme cité plus haut, on a assisté à l'apparition de la fonction dite DBL (Dynamic Bending Light en anglais pour lumière virage mobile, ou code virage) qui permet d'orienter un faisceau lumineux produit par une source lumineuse d'un dispositif projecteur de type feu de croisement, de telle sorte que la route soit éclairée de façon optimale lorsque le véhicule aborde un virage. Avec une telle fonction, on autorise un mouvement latéral du dispositif projecteur selon un axe vertical.

On dispose donc désormais de certains dispositifs projecteurs ou de caches mobiles qui doivent pouvoir être actionnés automatiquement ou non en fonction de certaines conditions de route. Une telle mobilité implique cependant un certain nombre de contraintes, parmi lesquelles on trouve l'obligation de vérifier fréquemment - voire en permanence - l'orientation du dispositif projecteur mobile considéré, pour que les commandes de mouvement envoyées aux actionneurs du dispositif projecteur prennent en considération une orientation instantanée dudit dispositif. Deux familles principales de solution ont été proposées dans l'état de la technique pour répondre à cette obligation.

Dans la première famille de solutions, on n'utilise pas, principalement pour des raisons économiques, de système de recopie d'une position du dispositif projecteur pour en connaître l'orientation. On utilise alors essentiellement des moteurs de type pas à pas. Dans de tels moteurs, on trouve notamment une unité de contrôle qui transmet à un bloc moteur des commandes de mouvement pas à pas, de telle sorte qu'une tige moteur ne puisse évoluer qu'entre des positions parfaitement définies, chacune des positions correspondant à un nombre de pas effectués. Avec ce type de moteurs, il n'est pas nécessaire d'utiliser des capteurs de recopie pour déterminer une position de la tige moteur; en effet, un dénombrement du nombre de pas commandés est suffisant pour déterminer avec précision cette position.

Un problème se pose cependant lors de la mise sous tension du dispositif projecteur auquel on a associé un moteur pas à pas. En effet, il faut pouvoir déterminer rapidement et sans ambiguïté la position initiale, c'est à dire sa position à la mise sous tension, de la tige moteur afin de contrôler par la suite son état d'avancement.

Une première solution proposée consiste en la mémorisation de la dernière position de la tige moteur avant qu'on ne coupe le moteur ; mais une telle opération est délicate car on ne peut pas être certain que les dernières commandes de pas transmises par l'unité de contrôle ont effectivement pu être prises en compte dans l'avancement de la tige moteur avant la coupure de l'alimentation de ce dernier.

Une deuxième solution proposée consiste, à chaque mise sous tension du dispositif projecteur, en une mise en butée de la tige moteur au niveau d'un plan physique fixe. La mise en butée correspond soit à une rentrée complète, soit à une sortie complète de la tige moteur. C'est seulement à l'instant précis où la tige moteur est dans une position de butée que l'on peut connaître avec certitude la position de la tige moteur, et donc l'orientation du dispositif projecteur. Mais, d'une part, le temps de mise en butée augmente nettement le temps de mise en service effectif du dispositif projecteur. Et, d'autre part, le fait de devoir atteindre une position de butée a pour effet d'orienter, pendant la durée d'initialisation, le faisceau lumineux issu du dispositif projecteur dans une position limite soit vers le haut, soit vers le bas, ce qui a pour effet soit d'éblouir un conducteur circulant en sens inverse, soit de réduire considérablement la portée des projecteurs pendant cette durée d'initialisation.

Dans la deuxième famille de solutions, on utilise un système de recopie d'une position du dispositif projecteur pour en connaître en permanence l'orientation. On n'a ainsi pas besoin de recourir à des phases d'initialisation pour repérer une position de départ du dispositif projecteur. Les actionneurs utilisés dans ce type d'applications peuvent être de n'importe quel type, par exemple des moteurs dits à courant continu (DC), avec collecteur ou sans collecteur (brushless), ou éventuellement de type pas à pas. Différents types de systèmes de recopie sont connus dans l'état de la technique : on trouve notamment des systèmes à basculement mécanique, des systèmes à potentiomètre résistif, des systèmes à capteur effet hall (à basculement ou linéaire), des systèmes à capteur magnéto-résistif (à basculement ou linéaire), ou encore des systèmes à capteur capacitif.

Ces solutions présentent cependant également différents inconvénients : pour les systèmes dits à basculement, ou switch en anglais, quelle que soit la technologie utilisée, on ne peut pas connaître précisément la position du dispositif projecteur. En effet, un switch ne peut différencier que deux états distincts, et la seule information qu'il peut produire est une information binaire. Pour les autres systèmes cités, qui permettent à chaque instant de connaître précisément la position du dispositif projecteur grâce à une couverture de l'ensemble de la plage du mouvement du projecteur, l'inconvénient principal réside dans la complexité du système à mettre en place : en effet, outre des inconvénients spécifiques à chacun des systèmes cités, chaque système de recopie fait nécessairement intervenir un émetteur, capable de transmettre une information de position précise relative à l'orientation du dispositif projecteur, et un récepteur pour recevoir et rendre exploitable l'information de position. Une telle multiplicité des éléments du système de recopie rend le système coûteux, encombrant et plus fragile.

L'objet de l'invention répond aux problèmes qui viennent d'être exposés. D'une façon générale, on propose dans l'invention un système de détermination de la position d'un élément mobile d'un projecteur, par exemple incluant un système de recopie, qui permet donc de s'affranchir des phases d'initialisation et de leurs inconvénients, permettant de connaître en permanence l'évolution de la position du dispositif projecteur/ de l'élément mobile auquel il est associé, et qui nécessite l'ajout d'un nombre d'éléments limité par rapport à un dispositif projecteur fonctionnant sans système de recopie.

L'invention a pour objet un dispositif d'éclairage pour véhicule automobile, comportant au moins un dispositif projecteur dans un boîtier de support, ledit dispositif projecteur comportant au moins une source lumineuse associée à un réflecteur pour générer un faisceau lumineux destiné à éclairer la route, ledit dispositif d'éclairage comportant au moins un élément mobile, choisi parmi le ou un des dispositif(s) projecteur(s) monté mobile par rapport au boîtier de support ou un composant mobile du ou d'un des dispositif(s) projecteur(s) par rapport au reste dudit dispositif projecteur ou par rapport audit boîtier de support, et un système de détermination de la position de l'élément mobile , ledit système comprenant un émetteur, pour produire une information de position dudit élément mobile, et un récepteur, pour récupérer l'information de position, l'émetteur étant la source lumineuse et le récepteur étant un élément photosensible, notamment comprenant au moins une cellule photosensible.

A cet effet, dans l'invention, on propose donc d'utiliser la source lumineuse, par définition toujours présente dans tous les dispositifs projecteurs, comme émetteur du système de détermination de position ou de recopie. L'information de position produite par l'émetteur est ainsi une information lumineuse, qui est récupérée et exploitée par un récepteur photosensible. L'information de position lumineuse peut notamment être obtenue au niveau d'une ouverture présente au niveau du dispositif projecteur, ou d'une ouverture pratiquée dans le composant mobile du type cache. On obtient ainsi au niveau de l'ouverture une fuite de lumière dont la position évolue simultanément au mouvement du dispositif projecteur ou du cache. En repérant, grâce au récepteur, la direction de la fuite de lumière, on peut facilement déduire la position instantanée du dispositif projecteur / du cache.

L'invention concerne donc, par exemple, un dispositif projecteur disposé dans un boîtier de support, le dispositif projecteur étant mobile par rapport au boîtier et comportant au moins une source lumineuse associée à un réflecteur pour générer un faisceau lumineux destiné à éclairer la route, et un système de recopie de la position du dispositif projecteur par rapport au boîtier de support, ledit système de recopie comprenant (notamment étant essentiellement constitué d') un émetteur, pour produire une information de position du dispositif projecteur par rapport au boîtier de support, et (d') un récepteur, pour récupérer l'information de position, caractérisé en ce que l'émetteur est la source lumineuse et en ce que le récepteur est un élément photosensible, comprenant notamment au moins une cellule photosensible.

Le dispositif projecteur selon l'invention peut en outre présenter, en plus des caractéristiques qui viennent d'être mentionnées dans le paragraphe précédent, une ou plusieurs des caractéristiques complémentaires suivantes :
- le dispositif projecteur est mobile par rapport au boîtier de support selon au moins un axe de rotation ;
- l'information de position produite par l'émetteur est constituée par un rayon lumineux correspondant à une fuite lumineuse passant au niveau d'une ouverture du dispositif projecteur, la direction de ladite fuite lumineuse variant avec le changement de position du dispositif projecteur ;
- l'ouverture laissant passer la fuite lumineuse se situe entre le réflecteur et un intermédiaire du dispositif projecteur ;
- l'ouverture laissant passer la fuite lumineuse est réalisée dans le réflecteur ;
- le dispositif projecteur comporte un guide optique, par exemple comprenant une ou plusieurs fibre optique, disposé au niveau de l'ouverture laissant passer la fuite lumineuse, pour concentrer et/ou guider le flux du rayon lumineux correspondant à la fuite lumineuse ;
- le réflecteur est fixe par rapport au boîtier de support ;
- l'axe de rotation est un axe vertical pour laisser le dispositif projecteur évoluer selon un mouvement latéral, notamment pour réaliser une fonction de code virage ;
- l'axe de rotation est un axe horizontal pour laisser le dispositif projecteur évoluer selon un mouvement de basculement, notamment pour réaliser une correction de portée d'éclairage ;
- le récepteur est relié à des moyens pour évaluer un état d'usure de la source lumineuse en comparant l'intensité du flux lumineux reçu au niveau du récepteur à différents instants et pour une même position du dispositif projecteur.
- l'élément mobile est un composant du ou d'un des dispositifs projecteurs, ledit élément mobile étant choisi parmi un cache ou un filtre, du type filtre infra-rouge, apte à intercepter dans au moins une position au moins en partie le faisceau lumineux émis par la source lumineuse.
- l'élément mobile est un cache multi-fonction, notamment un cache bi-fonction code/route, un cache tri-fonction code à droite/code à gauche/route, un cache mufti-fonction permettant d'obtenir au moins une fonction AFS, ou un filtre bi-fonction infra-rouge code dans le visible/route dans l'infra-rouge
- l'élément mobile est un cache ou un filtre muni d'ouverture(s) aptes à coopérer avec l'émetteur dans la détermination de sa position.

Des exemples de caches mobiles sont par exemple décrits dans le brevet EP 1 197 387, et des exemples de filtre infra-rouge mobiles sont par exemple décrits dans le brevet EP 1 139 011.

Un autre objet de l'invention est un véhicule automobile équipé d'au moins un projecteur présentant les caractéristiques essentielles et éventuellement une ou plusieurs caractéristiques complémentaires mentionnées ci-dessus.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. En particulier, les figures illustrent l'invention dans le cas d'un dispositif projecteur de type feu de croisement appartenant à la famille des projecteurs elliptiques, mobile selon uniquement un axe de rotation vertical pour réaliser la fonction DBL. Il est évident que le système de recopie particulier, qui est une caractéristique importante du dispositif projecteur selon l'invention dans le cas où l'élément mobile est un dispositif projecteur, peut être mis en oeuvre avec tout type de projecteurs mobile, de la famille des projecteurs elliptiques ou paraboliques, et quelle que soit la nature du mouvement susceptible d'être effectué par le dispositif projecteur. L'invention concerne aussi un élément mobile qui se réduit à un ou plusieurs cache(s) , qui est (sont) mobile(s) par rapport au dispositif projecteur dans lequel il(s) est(sont) intégré(s), notamment par rapport au réflecteur ou à la source lumineuse.

Les figures montrent :
- à la figure 1, une représentation schématique du dispositif projecteur selon l'invention dans une première position ;
- à la figure 2, une illustration plus détaillée du dispositif projecteur selon l'invention dans une première position ;
- à la figure 3, une représentation schématique du dispositif projecteur selon l'invention dans une deuxième position ;
- à la figure 4, une illustration plus détaillée du dispositif projecteur selon l'invention dans une deuxième position.

Sur les différentes figures, les éléments qui sont communs à plusieurs figures auront conservé les mêmes références.

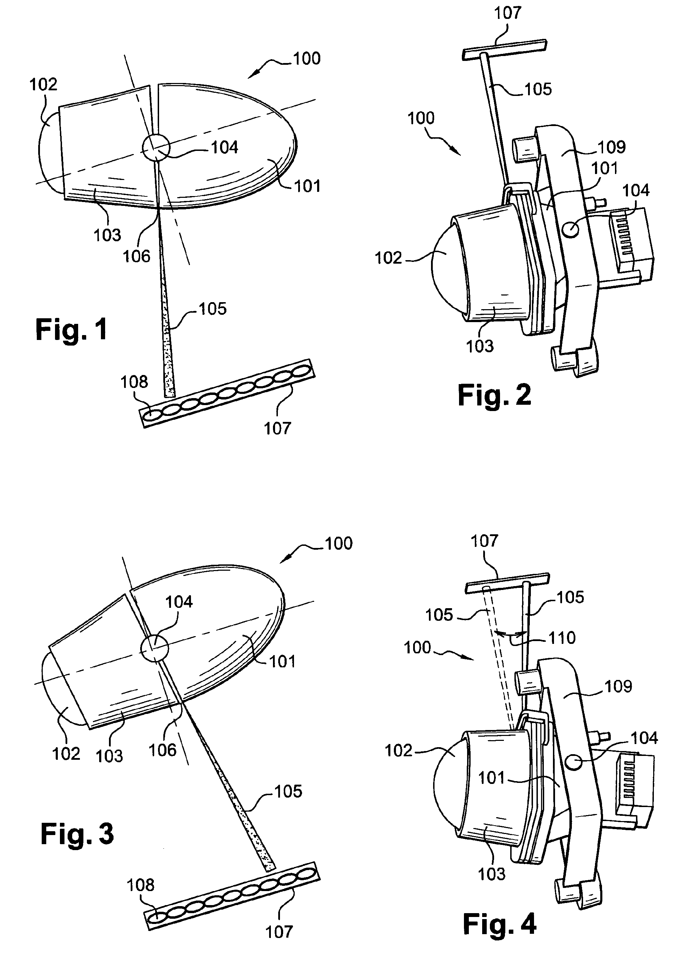

La figure 1 montre une représentation schématique d'un dispositif projecteur 100 selon l'invention. Dans l'exemple représenté le projecteur 100 est de type elliptique : dans ce type de projecteurs, une tache de concentration lumineuse est générée par une source lumineuse disposée au sein d'un réflecteur 101. La tache de concentration lumineuse est ensuite projetée sur la route par une lentille convergente 102, par exemple une lentille de type plan-convexe. La lentille est solidarisée sur le dispositif projecteur au moyen d'une pièce de liaison 103, appelée intermédiaire, qui est par ailleurs fixée au réflecteur 101. L'ensemble de ces éléments sont disposés dans un boîtier de support, non représenté, fixe par rapport à la carrosserie du véhicule sur lequel est monté le dispositif projecteur 100.

Le dispositif projecteur 100 est mobile par rapport au boîtier de support selon un mouvement de rotation autour d'un axe vertical 104. L'axe vertical 104 passe approximativement par une position centrale du dispositif projecteur 100, au niveau de la jonction entre le réflecteur 101 et de l'intermédiaire 103. Typiquement, la rotation autour de l'axe vertical 104 est utilisée pour mettre en oeuvre la fonction dite code virage.

Dans de tels dispositifs projecteurs, comme dans tout dispositif projecteur, des fuites de lumière existent entre différentes pièces constituant le dispositif projecteur. Ces fuites de lumière proviennent de la source lumineuse, qui perd par ces fuites une petite quantité du flux total dont elle dispose pour constituer un faisceau lumineux destiné à éclairer la route. Sur les différentes figures, on a uniquement représenté une fuite lumineuse 105 qui sort du dispositif projecteur au niveau d'une ouverture 106 existant entre le réflecteur 101 et l'intermédiaire 103.

Selon l'invention, on dispose un récepteur 107, de type élément photosensible, de telle sorte qu'il soit atteint par la fuite lumineuse 105. L'élément photosensible 107 est constitué d'un ensemble de cellules photosensibles 108. Il peut s'agir aussi d'une surface photosensible de type PSD (pour « Position Sensor Device »), ou encore d'une cellule photosensible différentielle. De préférence, on dispose le récepteur 107 et on choisit sa forme et sa taille de telle sorte qu'il est en permanence atteint par la fuite lumineuse 105 ; autrement dit, chacune des extrémités de l'élément photosensible 107 reçoit la fuite lumineuse 105 dans une des positions dites limites du dispositif projecteur, une position limite correspondant à un déplacement maximal du dispositif projecteur 100 dans une direction donnée. La mise en place du récepteur 107 peut être réalisée lors de l'assemblage du dispositif projecteur. Sur les différentes figures, par soucis de clarté, on a représenté l'élément photosensible exagérément éloigné du dispositif projecteur 100.

L'élément photosensible 107 est relié à une unité de contrôle non représentée qui permet de déterminer à chaque instant quelles cellules photosensibles 108 reçoivent un flux lumineux significatif, correspondant à l'incidence de la fuite lumineuse 105. En fonction des cellules photosensibles éclairées, l'unité de contrôle peut déterminer la position instantanée du dispositif projecteur 100 et vérifier si cette position est en accord avec des commandes de mouvement transmises au dispositif projecteur 100.

La figure 2 est une représentation plus réaliste du dispositif projecteur 100 selon l'invention, dans une position correspondant à celle de la figure 1. On y retrouve essentiellement les mêmes éléments que sur la figure 1. On y voit également un cadre 109, qui est fixé de façon inamovible au cadre de support non représenté. C'est au niveau du cadre 109 que l'axe de rotation 104 prend appui.

La figure 3 montre une représentation schématique du dispositif projecteur 100 selon l'invention dans une position différente de celle montrée à la figure 1, le dispositif projecteur 100 ayant effectué un mouvement de rotation autour de l'axe 104. On peut constater sur cette figure que la fuite lumineuse 105 s'est déplacée sur l'élément photosensible 107 selon un angle 110, qui correspond à l'angle de la rotation effectuée entre les deux positions représentées, et qui est visible à la figure 4 ; cette figure est une représentation plus réaliste du dispositif projecteur 100 selon l'invention, dans une position correspondant à celle de la figure 3.

Dans le dispositif selon l'invention, on peut utiliser toute fuite lumineuse présente au sein du projecteur pour faire fonctionner le système de recopie proposé. Il suffit de placer en conséquence l'élément photosensible 107. Les fuites lumineuse exploitables peuvent être des fuites au niveau d'ouvertures initialement présentes dans le dispositif projecteur, ou être des fuites au niveau d'ouvertures spécialement prévues pour leur utilisation dans un système de recopie. On peut ainsi par exemple réaliser une légère ouverture dans le réflecteur 101, de préférence dans une zone non utilisée pour produire le faisceau lumineux correspondant à un feu de croisement. La fuite lumineuse issue de cette ouverture supplémentaire est alors utilisée de façon similaire à la fuite lumineuse 105 sur les figures décrites.

Dans certains exemples de réalisation, on utilise une fibre optique, dont une première extrémité est disposée au niveau de l'ouverture par laquelle passe les fuites de lumière exploitées dans le système de recopie. La deuxième extrémité de la fibre optique est orientée vers l'élément photosensible 107. Un tel mode de réalisation permet notamment d'avoir une fuite de lumière dont le flux est plus concentré, et dont on peut orienter la direction de sortie, et placer ainsi l'élément photosensible 107 à un endroit peu encombrant. L'intensité de la source lumineuse du dispositif projecteur est telle qu'il n'est pas nécessaire de disposer la première extrémité de la fibre optique selon une orientation particulière pour obtenir suffisamment de flux lumineux au niveau de la deuxième extrémité.

Le récepteur 107 est avantageusement, en terme de simplicité de conception et de réalisation, immobile par rapport au boîtier de support. Rien n'empêche cependant de prévoir que le récepteur 107 soit mobile par rapport au boîtier support 107, à condition que le dispositif projecteur demeure en mouvement par rapport au récepteur 107 lorsque des commandes de mouvement sont communiquées au dispositif projecteur 100.

Le mouvement du dispositif projecteur par rapport au boîtier de support peut être effectué selon un ou plusieurs axes de rotation, ou selon un mouvement de translation, ou selon toute combinaison de mouvement de translation et de rotation. Il en est de même quand l'invention s'applique à des caches ou filtres mobiles.

Enfin, une application particulière du système de recopie selon l'invention est qu'il permet d'obtenir une information sur un état de fonctionnement de la source lumineuse du dispositif projecteur. En mémorisant, régulièrement ou de façon aléatoire, au moyen de l'unité de contrôle reliée au récepteur 107, une information relative à l'intensité du flux lumineux reçu par les cellules photosensibles 108 pour un ensemble de positions données du dispositif projecteur 100, on est en mesure d'observer les évolutions de cette intensité et de détecter ainsi soit une usure de la source lumineuse, qui se traduit par une baisse, au cours du temps, de l'intensité, soit une défaillance de la source lumineuse, qui se traduit par une intensité nulle au niveau du capteur 107. Toute anomalie détectée peut être signalée au conducteur par des moyens appropriés.

## Revendications

1. Dispositif d'éclairage pour véhicule automobile, comportant au moins un dispositif projecteur (100) dans un boîtier de support, ledit dispositif projecteur (100) comportant au moins une source lumineuse associée à un réflecteur (101) pour générer un faisceau lumineux destiné à éclairer la route, ledit dispositif d'éclairage comportant au moins un élément mobile, choisi parmi le ou un des dispositif(s) projecteur(s) monté mobile par rapport au boîtier de support ou un composant mobile du ou d'un des dispositif(s) projecteur(s) par rapport au reste dudit dispositif projecteur ou par rapport audit boîtier de support, et un système de détermination de la position de l'élément mobile (100), ledit système comprenant un émetteur, pour produire une information de position dudit élément mobile, et un récepteur, pour récupérer l'information de position, **caractérisé en ce que** l'émetteur est la source lumineuse et **en ce que** le récepteur est un élément photosensible (107), notamment comprenant au moins une cellule photosensible (108).

2. Dispositif d'éclairage selon la revendication 1, **caractérisé en ce que** le dispositif projecteur (100) disposé dans un boîtier de support, le dispositif projecteur (100) étant mobile par rapport au boîtier et comportant au moins une source lumineuse associée à un réflecteur (101) pour générer un faisceau lumineux destiné à éclairer la route, et un système de détermination de la position du dispositif projecteur (100) par rapport au boîtier de support sous forme d'un système de recopie, ledit système de recopie comprenant un émetteur, pour produire une information de position du dispositif projecteur (100) par rapport au boîtier de support, et un récepteur, pour récupérer l'information de position, l'émetteur est la source lumineuse et le récepteur étant un élément photosensible (107).

3. Dispositif selon la revendication 1 ou 2 **caractérisé en ce que** le dispositif projecteur (100) est mobile par rapport au boîtier de support selon au moins un axe de rotation (104).

4. Dispositif selon l'une au moins des revendications précédentes **caractérisé en ce que** l'information de position produite par l'émetteur est constituée par un rayon lumineux correspondant à une fuite lumineuse (105) passant au niveau d'une ouverture (106) du dispositif projecteur (100) ou du composant mobile , la direction de ladite fuite lumineuse (105) variant avec le changement de position du dispositif projecteur (100) ou du composant mobile compris dans le dispositif projecteur (100).

5. Dispositif selon la revendication précédente **caractérisé en ce que** l'ouverture (106) laissant passer la fuite lumineuse (105) se situe entre le réflecteur (101) et un intermédiaire (103) du dispositif projecteur (100).

6. Dispositif selon la revendication 4 **caractérisé en ce que** l'ouverture (106) laissant passer la fuite lumineuse (105) est réalisée dans le réflecteur (101).

7. Dispositif selon l'une au moins des revendications 4 à 6 **caractérisé en ce qu'**il comporte un guide optique, notamment une ou plusieurs fibre(s) optique(s), disposé au niveau de l'ouverture (106) laissant passer la fuite lumineuse (105), pour concentrer/guider le flux du rayon lumineux correspondant à la fuite lumineuse (105).

8. Dispositif selon l'une au moins des revendications précédentes **caractérisé en ce que** le réflecteur (101) est fixe par rapport au boîtier de support.

9. Dispositif selon l'une au moins des revendications 2 ou 3 **caractérisé en ce que** l'axe de rotation (104) est un axe vertical pour laisser le dispositif projecteur (100) évoluer selon un mouvement latéral, notamment pour réaliser une fonction de code virage.

10. Dispositif selon l'une au moins des revendications 2,3 ou 9 **caractérisé en ce que** l'axe de rotation (104) est un axe horizontal pour laisser le dispositif projecteur (100) évoluer selon un mouvement de basculement, notamment pour réaliser une correction de portée d'éclairage.

11. Dispositif l'une au moins des revendications précédentes **caractérisé en ce que** le récepteur (107) est relié à des moyens pour évaluer un état d'usure de la source lumineuse en comparant l'intensité du flux lumineux reçu au niveau du récepteur (107) à différents instants et pour une même position de l'élément mobile (100).

12. Dispositif l'une au moins des revendications précédentes **caractérisé en ce que** l'élément mobile est un composant du ou d'un des dispositifs projecteurs, ledit élément mobile étant choisi parmi un cache ou un filtre, du type filtre infra-rouge, et étant apte à intercepter dans au moins une position au moins en partie le faisceau lumineux émis par la source lumineuse.

13. Dispositif selon la revendication 12, **caractérisé en ce que** l'élément mobile est un cache multi-fonction, notamment un cache bi-fonction code/route, un cache tri-fonction code à droite/code à gauche/route, un cache multi-fonction permettant d'obtenir au moins une fonction AFS, ou un filtre bi-fonction infra-rouge code dans le visible/route dans l'infra-rouge

14. Dispositif selon la revendication 12 ou 13, **caractérisé en ce que** l'élément mobile est un cache ou un filtre muni d'ouverture(s) aptes à coopérer avec l'émetteur dans la détermination de sa position.

15. Véhicule automobile équipé d'au moins un dispositif selon l'une des revendications précédentes.
